# EUROPEAN PATENT SPECIFICATION

(11) **EP 2 244 973 B1**
(45) Date of publication and mention of the grant of the patent: **07.03.2012**
(21) Application number: 08858216.8
(22) Date of filing: 05.12.2008
(51) Int. Cl.: C01B 33/149, C09C 1/30

(54) **A POWDER COMPOSED OF METALLIC SILVER NANO-PARTICLES SURFACE- CONJUGATED WITH A SILICA CARRIER, A METHOD OF ITS MANUFACTURE AND USE**
PULVER AUS NANOPARTIKELN AUS METALLISCHEM SILBER, DIE MIT EINEM SILICIUMDIOXIDTRÄGER OBERFLÄCHENKONJUGIERT SIND, UND VERFAHREN ZU SEINER HERSTELLUNG UND VERWENDUNG
POUDRE COMPOSÉE DE NANOPARTICULES D'ARGENT MÉTALLIQUE CONJUGUÉES EN SURFACE AVEC UN SUPPORT DE SILICE, PROCÉDÉ POUR SA FABRICATION ET SON UTILISATION

(30) Priority: 06.12.2007 PL 38396807
(43) Date of publication of application: 03.11.2010
(73) Proprietor: Poch S.A., 44-101 Gliwice (PL)
(72) Inventor: CZEPELAK, Helena, 44-100 Gliwice (PL); LANOWY, Waclaw, 41-700 Ruda Slaska (PL); MALINOWSKA-KAPCIA, Bozena, 50-556 Wroclaw (PL); BARTCZAK, Piotr, 40-568 Katowice (PL); KASPRZYCKI, Przemyslaw, 40-467 Katowice (PL)
(74) Representative: Witek, Rafal
(86) International application number: PCT/PL2008/000094
(87) International publication number: WO 2009/072911

(56) References cited:
- EP-A- 1 889 810
- WO-A-2006/049378
- WO-A-2006/137851
- KAN-SEN CHOU ET AL: "Preparation and Characterization of Ag Nanoshell on SiO2 Spheres via Electroless Plating Technique in Acidic Conditions" NANOSCIENCE AND NANOTECHNOLOGY, 2006. ICONN '06. INTERNATIONAL CO NFERENCE ON, IEEE, PI, 1 July 2006 (2006-07-01), XP031070023 ISBN: 978-1-4244-0452-0

## Description

The subject of the present invention is a powder composed of metallic silver nano-particles surface-conjugated with a silica carrier, a method of manufacturing it and Its uses. The present invention relates to materials engineering and nanotechnology.

Nanometre-sized metal particles, particularly of precious metals, possess a series of desirable characteristics such as a large surface in comparison to the metallic mass, and the possibility of using metallic nano-particles or suspensions thereof In the production of novel materials. Thus, metallic nano-particles find use in such areas as chemical catalysis, material engineering, electronics, pharmacology and bioactive material manufacturing, particularly of biostatics and biocides.

In many uses, however, the use of metallic nano-particles is made difficult by their tendency to form larger agglomerates which results in undesirable effects such as the reduction of active surface area or a loss of suspension stability as a result of the precipitation of forming metallic agglomerates.

Therefore, a visible direction in materials engineering has recently been to seek materials usually composed of an inert carrier and metallic particles surface-conjugated with its surface.

Polish patent application No. P360190 reveals the use of the sol-gel method in the production of powders composed of spherical submicron silica grains, characterised in that known methods are used to produce a colloidal solution of SiO₂ from silicon tetroxide, ethanol, and aqueous ammonia, which is evaporated off and silver nitrate is added, whereafter, in one claimed process variant, reduction with hydrogen is performed at around 200°C. According to the cited description, the process revealed results In the formation of a powder composed of submicrometric silica grains with diameters from 200 to 800 nm with islets of metallic silver sized 20 to 40 nm on the surface. The method described is fit for laboratory use and yields a relatively heterogenous mixture of silica grains with a relatively wide range of diameters, possessing somewhat large deposits of metallic silver.

Other forms of similar products containing silver nano-particles and methods of producing thereof have also been described in WO2006049378. EP1070679, EP1775018, US5580655, WO2006/137851, and WO2007/122851,

In light of the above stated state of the art, the goal of the present invention is to deliver a novel material in the form of a powder consisting of metallic silver nano-conjugated with a silica carrier, said material to be characterised by desirable physicochemical properties connected directly to a stringently defined, relatively narrow range of silica grain size and the least possible, within In a given range, metal nano-particle size. Of particular importance is the stability of such properties as homogenous colour, transparency, tactile qualities of the final products manufactured using such a material. Equally desirable is the possibility of improving the homogeneity and stability obtained using such a powder. These characteristics should be achieved by increasing the homogeneity of the nanometric sizes of the manufactured powder grains. Keeping in mind the industrial use of the powder, the preferred silica carrier size Is such that it would facilitate easy use without deterioration of other usable characteristics of the manufactured products such as mechanical properties or permeability to steam. Keeping in mind the benefits stemming from a large surface area of the metal, it is also desirable to produce nano-particles with the smallest possible surface area, surface-conjugated with the silica carrier. Another goal of the present Invention is to deliver a method of producing a powder possessing the above mentioned, desirable qualities. It is particularly desirable that this method was fit for Industrial use.

Unexpectedly, such a stated goal has been attained in the present invention.

The goal of the present invention is a powder containing silica carrier grains with metallic silver nana-particles, where the diameter of at least 95% of the silica carrier grains is between 450 and 650 nm, whereas the diameter of at least 95% of the metallic silver nano-particles is from 0 do 20 nm. Preferentially, the diameter of at least 90% of the metallic silver nano-particles is from 0 to 10 nm.

The next goal of the present invention Is a method of industrially producing a powder containing silica carrier grains with metallic silver nano-particles, characterised in that a colloidal suspension of SiO₂ is produced during a reaction of tetraethyl orthosilicate and aqueous ammonia, and the resulting silica is centrifuged off at 6 000 G to 25 000 G, and is subsequently treated with ultrasounds, In a preferential embodiment of the present invention, ultrasounds in the frequency range from 20 to 30 kHz are used. Next, In the method according to the present invention, silver nitrate Is applied to the silica carrier in the ultrasound chamber, and the obtained product Is dried. In a preferential embodiment of the present Invention it is also ground and sieved. Next, in the method according to the present invention, the silver nitrate is reduced with hydrogen at a temperature In excess of 300°C. In a preferential embodiment of the present invention, the reduction is performed at a temperature of 300°C to 500°C. The reduction results In a powder containing silica carrier grains with metallic silver nano-particles. In a preferential embodiment of the present invention the powder produced is additionally sieved, mixed with other production materials and apportioned for sale.

Unexpectedly, the method according to of the present invention makes It possible to produce a powder composed of silver nano-conjugated with silica carrier grains on an industrial scale, which are characterised by a stringently defined, relatively narrow range of silica carrier grain size and a desirable low and narrow range of silver nano-particle sizes. Preferentially, the method according to the present invention results In a powder according to of the present invention with the above stated parameters.

The next goal of the present invention is the use of a powder according to the present invention and/or produced using a method according to the present invention to produce bioactive materials selected from a group of materials in the form of: a dispersion, emulsion, stratified materials, textiles, or fibrous or polymerised materials. Preferentially, the materials produced are used in manufacturing products selected from a group encompassing: textiles, weaves, fibrous materials, paints, lacquers, impregnates, plastics, paper products, insulators, furniture components, pharmaceuticals, foods and cosmetics. Powders according to the present invention possess numerous useful properties, significantly differentiating them from known silica powders surface-conjugated with metallic silver nano-particles:
- optimal selection of powder granularity makes it possible to meld two opposing tendencies. On one hand it has become possible to obtain homogenous dispersions in polymers and suspensions, without the need to meddle with existing production technologies. On the other hand it has become possible to avoid the alteration and/or deterioration of useful parameters such as mechanical durability or steam permeability of polymer layers due to micropore obstruction,
- stabilisation and limitation of the grain size range of the powder significantly improves the useful properties of the powder and the products produced therefrom (i.e. new plastics, paints or cosmetics). It is possible to produce homogenous powder suspensions of increased durability. This results In, among-others, homogenous colour, transparency and homogeneity of the surface of the products produced.

The selected embodiments of the present invention have been described in the examples below.

Example 1, The industrial process of producing a powder consisting of silica nano-grains surface-conjugated with silver nano-particles

### Raw materials for production

| No. | Name | Chemical formula | Purity |
|---|---|---|---|
| 1 | Rectified ethanol, denatured with bitrex | C₂H₈O | - |
| 2 | Ammonia sol'n 25% | H₃N | Analytical grade |
| 3 | Tetraethyl orthosilicate | C₈H₂₀O₄Si | Pure |
| 4 | Nitrogen | N₂ | Technical grade |
| 5 | Silver nitrate | AgNO₃ | Analytical grade |
| 6 | Hydrogen | H₂ | Technical grade |

The required apparatus (including measuring devices) encompasses:
- A reaction vessel with a volume of 120 dm³ compliant with explosive hazard standards equipped with a mechanical agitator for colloidal silica synthesis,
- Two calibrated thrust containers of 100 dm³ (for dosing alcohol and lye following centrifugation) and 25 dm³ (for dosing 25% ammonia solution),
- A graduated cylinder of 1 dm³ made of PP,
- Peristaltic pump (i.e. Boyser AMP-22) compliant with explosive hazard standards equipped with a regulator in the range of 0 to 50 Hz,
- High-speed centrifuge compliant with explosive hazard standards, equipped with an oxygen content sensor and a thermocouple measuring the temperature inside the rotor chamber,
- Vacuum pump (i.e. IEC 34-1),
- Analog scale with a 50 kg capacity and 50 g sensitivity,
- Steam dryer,
- Ultrasound bath (i.e. SONIC 0.5/25),
- Mechanical stirrer (i.e. OST B),
- An oven for hydrogen reduction capable of maintaining working temperatures of 500 °C (i.e. FCF 7 SMW) compliant with explosive hazard standards,
- Analytical scale with 1 g accuracy,
- A regulator with a manometer for the nitrogen,
- A regulator with a manometer for the hydrogen,
- A rotometer for hydrogen 0+20 dm³/min,
- An overpressure sensor for the oven.

### The technological process

In general, the process of producing silica with silver nano-particles V1 exhibiting bacteriostatic activity encompasses the following stages:

| No. | **Procedure** | Duration [h] |
|---|---|---|
| 1. | Synthesis of colloidal silica | 4,0 |
| 2. | Centrifugation of the colloidal silica produced | 3,0 |
| 3. | Sonification | 2,0 |
| 4. | Application of silver nitrate onto the colloidal silica in the ultrasound chamber | 1,0 |
| 5. | Drying | 36,0 |
| 6. | Grinding and sieving of the dry product | 4,0 |
| 7. | Reduction of the dry, silica-bound silver nitrate | 6,0 |
| 8. | Sieving and sorting by size | 2,0 |
| 9. | Apportionment and labelling | 1,0 |
| **Total** | | **59** |

### Synthesis of colloidal silica.

Using vacuum, place 80 dm³ of anhydrous ethanol denatured with bitrex into a 100 dm³ thrust container. Place the entire contents Into the reactor and initiate the agitator.

Vacuum-fill the 25 dm³ thrust container with 13,5 dm³ of 25% solution of ammonia and pour this into the reactor. In a graduated cylinder measure 7,8 dm³ of deionised water and pour this Into the reactor. After adding the water, stir the contents of the reactor for 10 minutes. In a 10 dm³ PE canister measure out 5.6 kg (6 dm³) of tetraethyl orthosilicate. Following 10 minutes after the addition of water, the weighed tetraethyl orthosilicate is added.

Following the addition of tetraethyl orthosilicate, the reactor contents should be mixed for 3 h (after the initial 5-10 minutes, the first signs of hydrolysis are observed, the solution becomes cloudy and a white precipitate forms).

The reaction may be conducted at room temperature.Centrifugation of colloidal silica.

The suspension is loaded onto a centrifuge using a peristaltic pump in an inert gas atmosphere (i.e. nitrogen, argon). The loading rate is regulated in the range of 5 to 25 Hz. The colloidal silica suspension is centrifuged at speeds of 10000 to 25000 RPM (from 5 000 G to 25 000 G) whereafter the wet, centrifuged product is supplemented with 1800 - 2400 cm³ of deionised water and sonificated.

### Sonification of colloidal silica.

The centrifuged colloidal silica is placed in a 5 dm³ beaker. Next, the beaker is placed in an ultrasound bath, and a mechanical stirrer element is placed in the beaker. The agitator is set to minimum surface penetration and turned on, and the ultrasound bath is initiated (ultrasound frequency of 20-30 kHz) The beaker content should be mixed for 1.5 h. After the initial 30 minutes of sonification, at 5 minutes intervals the agitator should be lowered such until the entire mixture is being stirred. After about 1.5 h of sonification the ultrasound bath and agitator should be turned off. The resulting suspension of micronised colloidal silica should be poured through a 0.2mm strainer, and placed into a 5 dm³ beaker.

### Application of silver nitrate onto the colloidal silica.

Place 700 g of silver nitrate into a 1÷2 dm³ beaker and dissolve in 800 cm³ of hot deionised water (70-90°C). Place the suspension of micronised colloidal silica in the ultrasound bath, turn on the bath and initiate the agitator. Slowly pour the silver nitrate solution into the colloidal silica. After poring in all of the silver nitrate solution, mix the contents of the beaker in the ultrasound bath for about 30 minutes.

### Drying

Pour a thin layer of the suspension of silver acetate applied onto the colloidal silica produced as above onto six PVC trays, and after the liquid has settled homogenously to a gel-like consistency, the trays should be dried in a steam drier at a temperature of 60 to 90°C for about 12 h in the dark.

### Grinding and sieving

The dried intermediate product should be crushed on the trays such that its pieces can be placed in a rotary mill (i.e. Retsch). After crushing on the trays, it should be ground in the rotary mill. The receiver should be equipped with a 0.75 mm mesh. The mill should be turned on and the dried, crushed intermediate product should be ground down. The milled intermediate product should be poured into a drum with a PE liner, tightly sealed and stored in the dark.

### Reduction

Pour the dried, ground intermediate product onto two clean, dry trays. The layer should be about 2.5 cm deep. Place the trays in the oven, which is then closed and sealed. Next, open the liquid nitrogen tank valve and open the valve on the hydrogen bottles. Open the valves on the lines regulating gas ingress into the oven chamber (hydrogen and nitrogen). The valve feeding nitrogen for cooling the oven should remain closed.

Turn on the oven and conduct an airtightness check. After a positive result, prior to turning the oven on, turn on the pump which forces deionised water into the cooling coils of the oven seal and hot gas exhaust (the DI water is in a closed circuit). At this time, the oven may be turned on and the reduction initiated. During the reduction, the oven is ventilated with a hydrogen/nitrogen mixture, and after reaching 350°C only hydrogen, and the oven temperature reaches 500°C over 4h. After the reduction is complete, the hydrogen feed valve should be closed, and the nitrogen cooling valve should be opened. The oven should be cooled to a temperature of around 180°C and then turned off. Next, the chamber should be opened and left to cool until 75°C is reached. During cooling, the tray stand is removed from the oven, and left on the laboratory bench to cool.

### Blending and allotment for sale.

The product produced is sieved on a 0.5 mm mesh and then transferred into 30 dm³ PE drums and, after any possible blending in the drums with other additives, is then sent off for analysis. After a positive evaluation it is then allotted for storage and sale.

Example 2. Analysis of the physicochemical parameters of the powder produced using the technology described in Example 1.

Using scanning electron microscopy (SEM) and transmission electron microscopy (TEM) the size of the silica carrier grains and the metallic silver nano-particles on its surface were determined.

As a result of the analysis conducted, we determined the following product characteristics:

### Silica carrier:

Spherical grains with diameters from 450 to 650 nm comprise 95% of the population.
Metallic nano-silver particles are settled on the surface of the carrier and possess diameters in the following ranges:
   0 -10 nm comprise 90% of all silver particles.
   0 - 20 nm comprise 95% of all silver particles.

Furthermore, the hollowing product characteristics were determined using electron microscopy, microbiological studies, steam permeability studies and an evaluation of the useful characteristics of the product:
- Ease of use - the appropriate choice of the diameter of the silica carrier makes it possible to obtain a homogenous dispersion of powder in polymers and suspensions used in the textile, plastics and paint industries. The absence of concentrations and agglomerations of is clearly visible, which often occur in nano-materials applied directly without a carrier,
- No negative influence on other mechanical properties of products. The diameter of the silica carrier does not deteriorate other properties such as the mechanical properties of fibres. The diameter of the powder is a degree of magnitude lesser than the diameter of cotton fibres (powder grain diameter = 0.6 micrometers, diameter of cotton fibres = about 12-20 microns). Another advantage is the lack of effect on the steam permeability of coatings produced. The diameter of the powder has been selected such that micropores responsible for water vapour transport do not get clogged.

Example 3. Properties of products obtained using a powder according to of the present invention.

A powder according to the present invention may best be used in the conservation of textile products (from synthetic, natural and mixed fibres), fibrous materials (meaning matted natural or synthetic fibre materials) or suspensions or emulsions (i.e. pharmaceutical or cosmetic products).

The introduction of nano-silver surface conjugated onto silica into the above materials is performed depending on the use of an appropriate application technique, through inclusion or coating:
- direct nano-silver dosage,
- premixed in water, alcohol (ethanol, propanol, glycols, glycerol), or polar organic solvents (DMF, DMSO, substituted amines).

The materials tested in the Example below have been manufactured using methods commonly used in the mentioned industries through the addition of the powder to the source materials prior to polymerisation.

Research confirming the biostatic properties of the powder according to the present invention have been performed in compliance with:
a) the research procedure entitled "Evaluation of the activity of biocide preparations protecting water-soluble products against microbiological contamination"; designed on the basis of the norm of the American Society for Testing and Materials - ASTM D 2574-86 entitled: "Test Method for Resistance of Emulsion Paints in the Container to Attack by Microorganisms"
b) the norm of the American Association of Textile Chemists and Colorists - AATCC 100-2004 entitled: "Antibacterial Finishes on Textile Materials: Assessment of";
c) the norm of the American Society for Testing and Materials - ASTM E 2149-01: "Standard Test Method for Determining the Antimicrobial Activity of Immobilized Antimicrobial Agents Under Dynamic Contact Conditions";

### Research results:

a) The norm entitled : Evaluation of the activity of biocide preparations protecting water-soluble products against microbiological contamination" was used. Analysis results are shown in Table 1.

The table contains the hollowing data:

| | |
|---|---|
| sample 16/6 - | acrylic paint without any addition of silica with silver nano-particles V1 (reference sample) |
| sample 16/7 - | acrylic paint with added silica with silver nano-partictes, V1, at 0.01 % (m/m) |
| sample 16/8 - | acrylic paint with added silica with silver nano-particles, V1, at 0.025% (m/m) |
| sample 16/9 - | acrylic paint acrylic paint with added silica with silver nano-particles, V1, at 0.05% (m/m) |
| To, T₁,...T₆ - | consecutive weeks, from zero to six |

| | |
|---|---|
| + - single colonies in quantifiable numbers on the surface of 1g inoculated paint ++ - numerous colonies on the surface of 1g inoculated paint and the medium (unquantifiable) +++ - confluent colony growth on the surface of the paint and medium (unquantifiable) * - growth of ambient microflora, ** - growth of bacteria following the first inoculation. | |

**Table 1. Evaluation of the effectiveness of acrylic paint protection by silica with silver nano-particles at 0.01% - 0.05% in a 6-week trial (1g of contamination, introduced weekly)**

| **Sample No.** | **SiO₂-Ag-concentration in the tube [%]** | **Presence of bacteria in 1 g paint after time T (weeks) [cfu]** | | | | | | |
|---|---|---|---|---|---|---|---|---|
| | | **T₀** | **T₁** | **T₂** | **T₃** | **T₄** | **T₅** | **T₆** |
| **16/6** | 0 | +++* | +++** | +++ | +++ | +++ | +++ | +++ |
| **16/7** | 0,01 | 0 | 0 | + (20 fu/g) | + (1 cfu/g) | * (25 (cfu/g) | 0 | 0 |
| **16/8** | 0,025 | 0 | 0 | 0 | 0 | + (2 cfu/g) | 0 | 0 |
| **16/9** | 0,05 | 0 | 0 | 0 | 0 | 0 | 0 | 0 |

b) the norm of the American Association of Textile Chemists and Colorists - AATCC 100-2004: "Antibacterial Finishes on Textile Materials: Assessment of" Analysis results are presented in Tables 2 and 3.

**Table 2. Results of the microbiological analysis of textiles and fibrous materials for Staphylococcus aureus, a Gram positive bacteria**

| **Sample description** | **R [%]** | **D/C** |
|---|---|---|
| natural fibre - 100% cotton with applied silica with silver nano-particles exhibiting biostatic activity | 99,60 | - |
| natural fibre - 100% cotton lacking applied silica with silver nano-particles, V1, (reference sample) | - | > 1 |
| synthetic fibre - 100% polyester with applied silica with silver nano-particles, V1, exhibiting biostatic activity | 96,00 | - |
| synthetic fibre -100% polyester lacking applied silica with silver nano-particles, V1, (reference sample) | - | >1 |
| natural fibre mat - cellulose mat with applied silica with silver nano-particles, V1, exhibiting biostatic activity | 91,00 | - |
| natural fibre mat - cellulose mat lacking applied silica with silver nano-particles, V1, (reference sample) | - | > 1 |

**Table 3. Results of the microbiological analysis of textiles and fibrous materials for Klebsiella pneumoniae, a Gram negative bacteria**

| **Sample description** | **R [%]** | **D/C** |
|---|---|---|
| natural fibre - 100% cotton with applied silica with silver nano-particles exhibiting biostatic activity | 99,99 | - |
| natural fibre - 100% cotton lacking applied silica with silver nano-particles, V1, (reference sample) | - | >1 |
| synthetic fibre - 100% polyester with applied silica with silver nano-particles, V1, exhibiting biostatic activity | 99,99 | - |
| synthetic fibre -100% polyester lacking applied silica with silver nano-particles, V1, (reference sample) | - | > 1 |
| natural fibre mat - cellulose mat with applied silica with silver nano-particles, V1, exhibiting biostatic activity | 99,99 | - |
| natural fibre mat - cellulose mat lacking applied silica with silver nano-particles, V1, (reference sample) | - | > 1 |

Where R denotes the reduction level calculated using the formula R=(B-A)/B*100%, A [cfu] - number of bacterial colonies after 24h in the studied sample, B [cfu] - number of bacterial colonies at t=0h in the reference sample, C [cfu] - number of bacterial colonies at t=0h in the reference sample, D [cfu] - number of bacterial colonies at t=24h in the reference sample

c) the norm of the American Society for Testing and Materials - ASTM E 2149-01: "Standard Test Method for Determining the Antimicrobial Activity of Immobilized Antimicrobial Agents Under Dynamic Contact Conditions".

Analysis results are presented in Table 4.

**Table 4. Results of the analysis of textiles, fibrous mats and polymerised materials**

| **Sample No.** | **C cfu/ml in a flask with a reference strain following a standard contact period "4h"** | **D cfu/ml in a reference sample following a standard contact period "4h"** | **%R** |
|---|---|---|---|
| natural fibre - 100% cotton with applied silica with silver nano-particles exhibiting biostatic activity | 36,5*10⁴ | ---------- | 99,99 |
| natural fibre - 100% cotton lacking applied silica with silver nano-particles exhibiting biostatic activity(reference sample) | | 12*10⁴ | ---------- |
| synthetic fibre mat - PP fibre mat with applied silica with silver nano-particles exhibiting biostatic activity | 24*10⁴ | ---------- | 99,5 |
| synthetic fibre mat - PP fibre mat lacking applied silica with silver nano-particles exhibiting biostatic activity(reference sample) | | 26.5*10⁴ | ---------- |
| synthetic fibre mat - PES fibre mat with applied silica with silver nano-particles exhibiting biostatic activity | 42,5*10⁵ | ---------- | 99,8 |
| synthetic fibre mat - PES fibre mat lacking applied silica with silver nano-particles, V1, exhibiting biostatic activity(reference sample) | | 50.5*104 | ---------- |
| polyethylene - PE foil with applied silica with silver nano-particles, V1, exhibiting biostatic activity | 14,5*10⁴ | ---------- | 100 |
| polyethylene - PE foil lacking applied silica with silver nano-particles, V1, exhibiting biostatic activity(reference sample) | | 18*10⁴ | ---------- |
| PU coating material with applied silica with silver nano-particles, V1, exhibiting biostatic activity | 34*10⁴ | ---------- | 99;69 |
| PU coating material lacking applied silica with silver nano-particles, V1, exhibiting biostatic activity(reference sample) | | 42,3*10⁴ | ---------- |

Where the degree of reduction is calculated using the formula R{%]= (B-A) / B x 100 or R[%]= (D-A) / D x 100

If the difference between C and D is greater than 15%, the equation should substitute D instead of B. A - cfu/ml in suspension with the studied sample after a set contact time ("4h"); B - cfu/ml prior to the addition of the examined material("0h"), C - cfu/ml in the flask containing only the reference strain after a set contact time ("4h"), D - cfu/ml in suspension with the reference sample after a set contact time ("4h").

## Claims

1. A powder containing silica carrier grains surface-conjugated with metallic silver nano-particles, **characterised in that** the diameter of at least 95% of the carrier grains is found in the range from 450 to 650 nm, whereas the diameter of at least 95% of the metallic silver nano-particles is found in the range from 0 to 20 nm.

2. A powder according to Claim 1, **characterised in that** the diameter of at least 90% of the metallic silver nano-particles is found In the range from 0 to 10 nm.

3. A method of industrially producing a powder containing silica carrier grains surface-conjugated with metallic silver nano-particles according to claim 1, **characterised in that** w a reaction between tetraethyl orthosilicate and aqueous ammonia results in an aqueous solution of colloidal SiO₂, the colloidal silica is centrifuged off at 5 000 to 25 000 G and is then sonificated , preferentially at a frequency of 20 to 30 kHz, and silver nitrate is applied onto the colloidal silica in the ultrasound chamber, and then the product produced is dried, ground and sieved, and then the silver nitrate is reduced with hydrogen at a temperature in excess of 300°C, preferentially from 300°C to 500°C, and the powder obtained using this method is preferentially sleved again, blended and apportioned for sale.

4. A use of a powder according to Claim 1 or 2 in the production of bioactive materials selected from a group encompassing dispersions, emulsions layered materials, textiles, fibrous materials or polymers.

5. A use according to Claim 4, **characterised in that** the materials produced are used In the production of goods selected from a group encompassing: textiles, paints, synthetic materials, paper materials, insulation, furniture products, pharmaceutical products, foods or cosmetics.

## Patentansprüche

1. Ein Pulver enthaltend Silica-Trägerkörner, die mit metallischen Silber-Nanopartikeln oberflächenkonjugiert sind, dadurch charakterisiert, dass der Durchmesser von mindestens 95% der Trägerkörner im Bereich von 450 bis 650 nm liegt, während der Durchmesser von mindestens 95% der metallischen Silber-Nanopartikel im Bereich von 0 bis 20 nm liegt.

2. Ein Pulver nach Anspruch 1, dadurch charakterisiert, dass der Durchmesser von mindestens 90% der metallischen Silber-Nanopartikel im Bereich von 0 bis 10 nm liegt.

3. Ein Verfahren zur Industriellen Herstellung eines Pulvers nach Anspruch 1, enthaltend Silizium-Trägerkörner, die mit metallischen Silber-Nanopartikeln oberflächenkonjugiert sind, dadurch charakterisiert, dass eine Reaktion zwischen Tetraethylorthosilikat und wässrigern Ammoniak zu einer wässrigen Lösung von kolloidalem SiO₂ führt, das kolloidale Silica bei 5 000 bis 25 000 G abzentrifugiert und dann sonifiziert wird, vorzugsweise bei einer Frequenz von 20 bis 30 kHz, und Silbernitrat auf das kolloidale Silica in der Ultraschallkammer aufgetragen wird, und dann das erzeugte Produkt getrocknet, gemahlen und gesiebt wird, und dann das Silbernitrat mit Wasserstoff bei einer Temperatur jenseits von 300 °C reduziert wird, vorzugsweise von 300 °C bis 500 °C, und das mit diesem Verfahren erhaltene Pulver vorzugsweise nochmals gesiebt, vermischt und für den Verkauf portioniert wird.

4. Eine Verwendung eines Pulvers nach Anspruch 1 oder 2 zur Herstellung von bioaktiven Materialien, ausgewählt aus der Gruppe umfassend Dispersionen, Emulsionen, geschichtete Materialien, Textile, faserige Materialien und Polymere.

5. Eine Verwendung nach Anspruch 4, dadurch charakterisiert, dass die hergestellten Materialien zur Herstellung von Gütern verwendet werden, ausgewählt aus einer Gruppe umfassend Textilien, Farben, synthetische Materialien, Papiermaterialien, Dämmstoffe, Einrichtungsgegenstände, pharmazeutische Produkte, Lebensmittel oder Kosmetika.

## Revendications

1. Poudre contenant des grains de support de silice conjugués en surface avec des nanoparticules d'argent métalliques, **caractérisée en ce que** le diamètre d'au moins 95 % des grains de support se situe dans la plage de 450 à 650 nm, tandis que le diamètre d'au moins 95 % des nanoparticules d'argent métalliques se situe dans la plage de 0 à 20 nm.

2. Poudre selon la revendication 1, caractérisée an ce que le diamètre d'au moins 90 % des nanoparticules d'argent métalliques se situe dans la plage de 0 à 10 nm.

3. Procédé de production industrielle d'une poudre contenant des grains de support de silice conjugués en surface avec des nanoparticules d'argent métalliques selon la revendication 1, **caractérisé en ce qu'**une réaction entre de l'orthosilicate de tétraéthyle et de l'ammoniac aqueux se traduit par une solution aqueuse de SiO₂ colloïdal, la silice colloïdale est centrifugée à 5000 à 25000 G puis est soniflée, de préférence à une fréquence de 20 à 30 kHz, et du nitrate d'argent est appliqué sur la silice colloïdale dans la chambre à ultrasons, puis le produit obtenu est séché, moulu et tamisé, puis le nitrate d'argent est réduit avec de l'hydrogène à une température dépassant 300°C, de préférence de 300°C à 500°C, et la poudre obtenue à l'aide de ce procédé est de préférence de nouveau tamisée, mélangée et partagée en portions pour la vente.

4. Utilisation d'une poudre selon la revendication 1 ou 2 dans la production de matières bioactives sélectionnées dans un groupe comprenant les dispersions, les émulsions, les matières en couches, les textiles, les matières ou les polymères fibreux.

5. Utilisation selon la revendication 4, **caractérisée en ce que** les matières produites sont utilisés dans la production de biens sélectionnés dans un groupe comprenant les textiles, les peintures, les matières synthétiques, les matières papier, l'isolation, les articles de mobiliers, les produits pharmaceutiques, les aliments ou les cosmétiques.
